# EUROPEAN PATENT APPLICATION

(11) **EP 2 932 854 A1**
(43) Date of publication of application: **21.10.2015**
(21) Application number: 15157150.2
(22) Date of filing: 02.03.2015
(51) Int. Cl.: A22C 9/00, A22C 17/00, A23L 1/31

(54) **Pickling liquid injector**

(30) Priority: 25.03.2014 JP 2014062138
(71) Applicant: Higashimoto Kikai Co., Ltd., Ikoma-shi Nara 630-0222 (JP)
(72) Inventor: Okada, Shinya, Yamabe-gun, Nara 630-2223 (JP)
(74) Representative: Pfenning, Meinig & Partner GbR

(57) **Abstract**

It is an object of the invention to improve the rotary-type pickling liquid injector so as to inject the pickling liquid into the meat ingredient correctly. A pickling liquid spout roller 1 is combined with an opposed roller 2. A convey mechanism conveys a meat ingredient between the spout and opposed rollers 1 and 2. The meat ingredient is nippedbetween the spout and opposed rollers 1 and 2, the rotary body 3 is rotated around the fixed body 4, and the opposed roller 2 is rotated around an axis thereof. The pickling liquid is injected into the meat ingredient.

## Description

### FIELD OF THE INVENTION

The invention relates to a pickling liquid injector that injects a pickling liquid into a meat ingredient for manufacturing a ham and so on.

### PRIOR ART

In a process for manufacturing a ham and so on, a pickling liquid injector is used so as to inject a pickling liquid into its meat ingredient. The pickling liquid injector generally includes a lot of needles. The meat ingredient is conveyed intermittently, and the needles are pierced in the meat ingredient so as to inject the pickling liquid into the meat ingredient during a temporary stop of meat ingredient.

On the other hand, as described in Patent Document 1, the applicant suggested a new structural pickling liquid injector. Patent Document 1 discloses a rotary-type injector including a pickling liquid spout roller. The spout roller includes cylindrical rotary and fixed bodies. The rotary body is fitted with an outer surface of the f ixedbody. The rotary body is disposed above a conveyer conveying the meat ingredient. A lot of small holes are formed in an outer surface of the rotary body. A slot is formed in the outer surface of the fixed body. A passage is formed in the fixed body. The small holes extend in a radial direction of the rotary body, and pass through the rotary body. The slot extends in a length direction of the fixed body. The passage is communicated with the slot. A pump is connected with the passage. A pickling liquid is pressured by the pump and fed into both the passage and slot so as to be spouted from the small holes. The meat ingredient is conveyed by the conveyer, and nipped between the fixed body and conveyer. Thus, the rotary body is rotated around the fixed body, and the pickling liquid is injected into the meat ingredient.

In this case, the injector needs not convey the meat ingredient intermittently. Thus, the injector can convey the meat ingredient continuously to achieve a high-speed process. Further, the meat ingredient is not harmed and strained by the needles. And further, there are no problems that the needles are snapped by the meat ingredient, and that the meat ingredient is contaminated by its fragment.

However, the meat ingredient is not always nipped between the rotary body and conveyer smoothly while being conveyed by the conveyer. A wedge-shaped space is formed between the rotary body and conveyer. The meat ingredient passes through the wedge-shaped space, and is nipped between the rotary body and conveyer. The space is made of both a curved surface of the rotary body and a flat surface of the conveyer. Thus, the meat ingredient is not always nipped smoothly because the space is small and its resistance is big, especially in case that the meat ingredient is hard. Accordingly, there is a problem that the pickling liquid is not always injected into the meat ingredient correctly.

There are problems that the injector is complex in structure and high in cost, and cannot be compact because it includes the conveyer conveying the meat ingredient.

Hence, it is an object of the invention to improve the rotary-type pickling liquid injector so as to inject the pickling liquid into the meat ingredient correctly.

Patent Document 1: Japanese Patent Publication No. 4198191

### SOLUTION TO THE PROBLEMS

According to the present invention, a pickling liquid spout roller is combined with an opposed roller. The pickling liquid spout roller includes cylindrical rotary and fixed bodies. The fixed body is fitted with an outer surface of the fixed body. A lot of small holes are formed in an outer surface of the rotary body. A slot is formed in the outer surface of the fixed body. A passage is formed in the fixed body. The small holes extend in a radial direction of the rotary body, and pass through the rotary body. The slot extends in a length direction of the fixed body. The passage is communicated with the slot. At least one pump is connected with the passage. A pickling liquid is pressured by the pump so as to be fed into both the passage and slot, and spouted from the small holes.

An opposed roller is parallel to the spout roller. The opposed roller is opposite to the spout roller at a position where the slot is disposed. A convey mechanism conveys a meat ingredient between the spout and opposed rollers. The meat ingredient is nipped between the spout and opposed rollers, the rotary body is rotated around the fixed body, and the opposed roller is rotated around an axis thereof. At the same time, the pickling liquid is injected into the meat ingredient.

According to a preferred embodiment of the present invention, the convey mechanism includes an incline chute. An opening groove is formed in the chute. The opposed roller is opposite to the spout roller at a position where the opening groove is disposed. The opposed roller, spout roller and opening groove extend widthwise of the chute. The chute extends between the spout and opposed rollers. The meat ingredient is slipped along the chute, and fed between the spout and opposed rollers.

Further, the opposedroller is disposedabove the opening groove, and the spout roller is disposed below the opening groove.

Further, a motor is connected with the rotary body, and the rotary body is rotated by the motor.

The opposed roller has the same structure as the spout roller.

### BRIEF DESCRIPTION OF THE DRAWING

Fig. 1A is a plan view illustrating a pickling liquid injector.
Fig. 1B is a side view illustrating the injector.
Fig. 1C is a front view illustrating the injector.
Fig. 2 is a partially cross-sectional view illustrating the injector.
Fig. 3 is a partially cross-sectional view illustrating the injector.
Fig. 4 is a cross-sectional view taken along line A-A in Fig. 3.
Fig. 5 is a partially enlarged view of Fig. 4.
Fig. 6 is a partially perspective view illustrating the injector.

### DETAILED EXPLANATION OF THE EMBODIMENTS

A preferred embodiment of the present invention will be explained below.

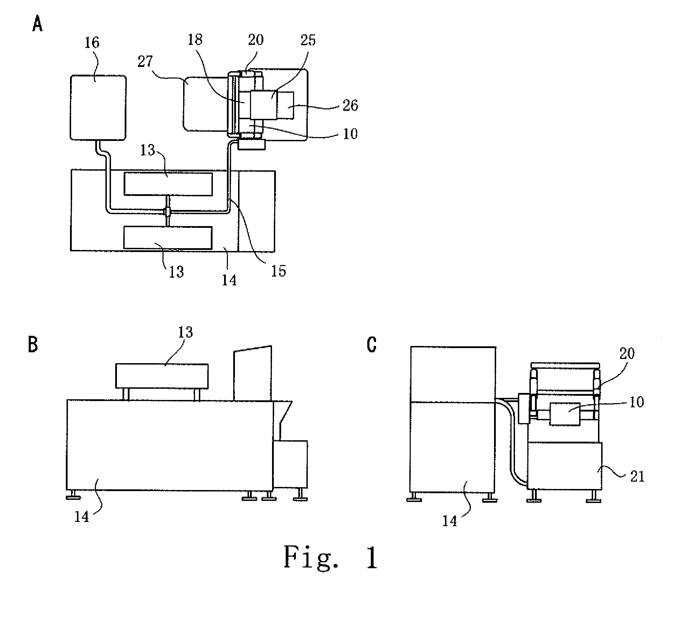

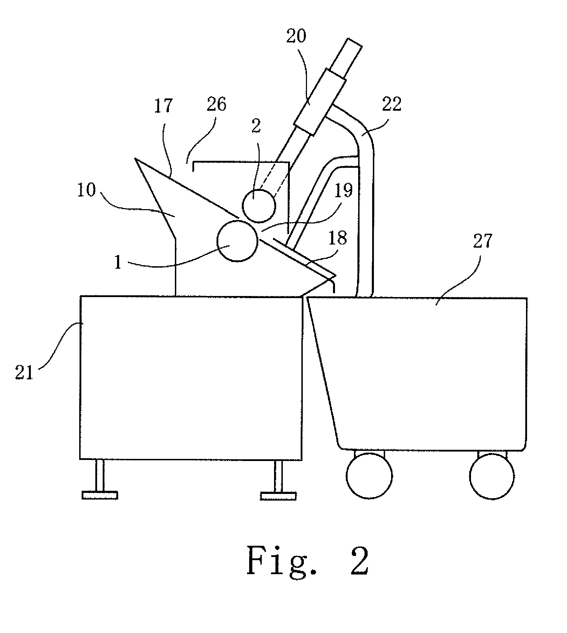

Fig. 1 illustrates a pickling liquid injector according to the invention. As shown in Fig. 2, in the embodiment of the injector, a pickling liquid spout roller 1 is combined with an opposed roller 2.

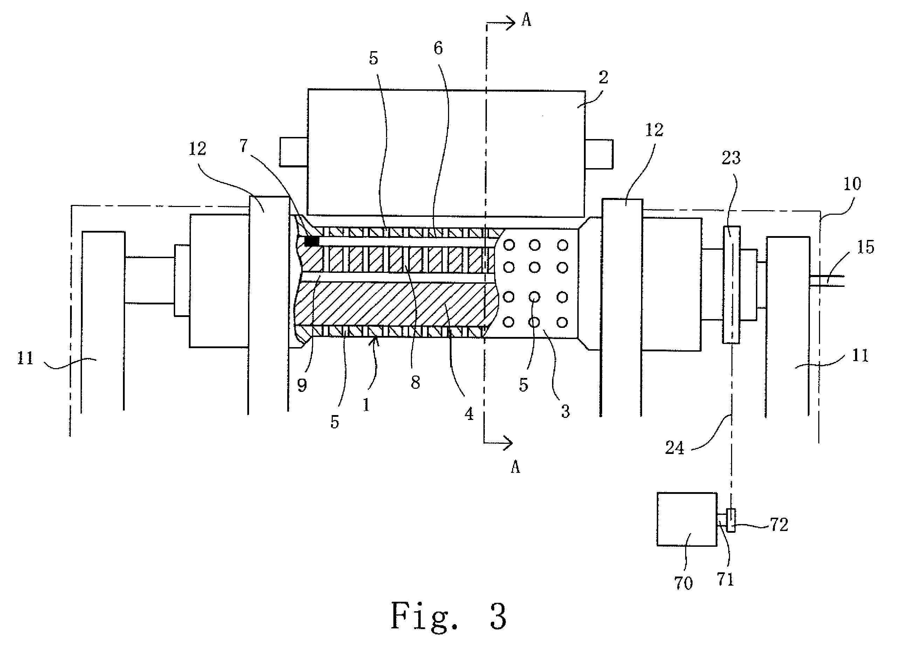

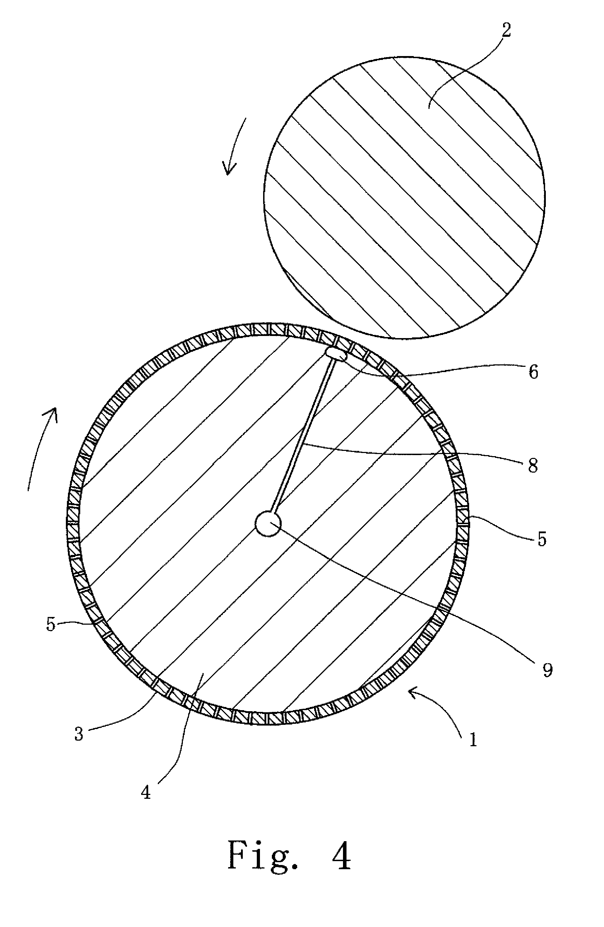

As shown in Figs. 3 and 4, the spout roller 1 includes cylindrical rotary and fixed bodies 3 and 4. The rotary body 3 is fitted with an outer surface of the fixed body 4. A seal ring (not shown) is inserted between the rotary and fixed bodies 3 and 4 so as to seal a gap therebetween. The spout roller 1 extends horizontally.

A lot of small holes 5 are formed in an outer surface of the rotary body 3. A slot 6 is formed in the outer surface of the fixed body 4. A passage is formed in the fixed body 4. The small holes 5 extend in a radial direction of the rotary body 3, and pass through the rotary body 3. The slot 6 extends in a length direction of the fixed body 4. A sealing member 7 seals a gap between the rotary and fixed bodies 3 and 4. The passage is communicated with the slot 6. In this embodiment, the passage includes a lot of communicating holes 8. A center hole 9 is formed in the fixed body 4. The communicating holes 8 extend in a radial direction of the fixed body 4, and are communicated with both the slot 6 and center hole 9. The spout roller 1 is accommodated in a casing 10. In the casing 10, the fixed body 4 is mounted and supported on a bracket 11. In the casing 10, the rotary body 3 is supported on a bearing (not shown) disposed in a bracket 12 for rotation around its axis.

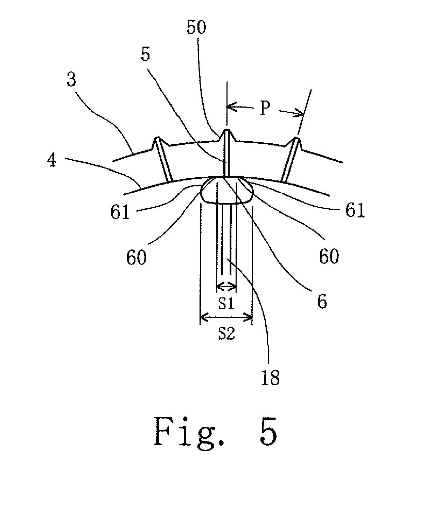

As shown in Fig. 5, opposite ends 60 of the slot 6 are spaced from each other with a gap S1. Side walls 61 are connected to the opposite ends 60 of the slot 6 respectively. The side walls 61 are spaced from each other with a gap S2 bigger than the gap S1, and inclined toward the opposite ends 60. In this embodiment, a lot of conical or pyramid-shaped projections 50 are formed on the outer surface of the rotary body 3. The small hole 5 is formed at each of center portions of the projections 50 respectively. Each of the small holes 5 is arranged circumferentially of the rotary body 3 with a pitch P. The pitch P is bigger than the gap S1.

As showninFig. 1, pumps 13 are connected with the passage in the fixed body 4. A pickling liquid is pressured by the pumps 13, and fed into both the passage and slot 6 so as to be spouted from the small holes 5. In this embodiment, the pumps 13 are mounted on a caster 14 outside the casing 10. A tank 16 holding a pickling liquid is connected to the pumps 13 via hoses or pipes 15. The pumps 13 are connected to the center hole 9 via the hoses or pipes 15 at an end of the spout roller 1. Thus, the pickling liquid is pressured by the pumps 13 so as to be fed into the center hole 9 from the tank 16. And, the pickling liquid is fed to the passage. And then, the pickling liquid is fed into the slot 6 through the communicating holes 8, and spouted from the small holes 5. The pumps 13 includes, for example, plunger pumps.

As shown in Fig. 3, the opposed roller 2 is parallel to the spout roller 1, and extends horizontally. The opposed roller 2 is opposite to the spout roller 1 at a position where the slot 6 is disposed. A meat ingredient is conveyed by a convey mechanism, and fed between the spout and opposed rollers 1 and 2. The meat ingredient is nipped between the spout and opposed rollers 1 and 2, the rotary body 3 is rotated around the fixed body 4, and the opposed roller 2 is rotated around its axis. At the same time, as described below, the pickling liquid is injected into the meat ingredient.

As shown in Fig. 2, in this embodiment, the convey mechanism includes an incline chute 17, 18. An opening groove 19 is formed in the chute 17, 18. The opposed roller 2 is opposite to the spout roller 1 at a position where the opening groove 19 is disposed. The opposed roller 2, spout roller 1 and opening groove 19 extend widthwise of the chute 17, 18. The meat ingredient is slipped along the chute 17, 18 so as to be fed between the spout and opposed rollers 1 and 2.

In this embodiment, the chute is divided into upper and lower portions 17 and 18 at the position where the opening groove 19 is disposed.

The opposed roller 2 is disposed above the opening groove 19. The spout roller 1 is disposed below the opening groove 19. The spout roller 1 is accommodated in the casing 10. The fixed body 4 is supported on the bracket 11. The rotary roller 3 is supported on the bearing.

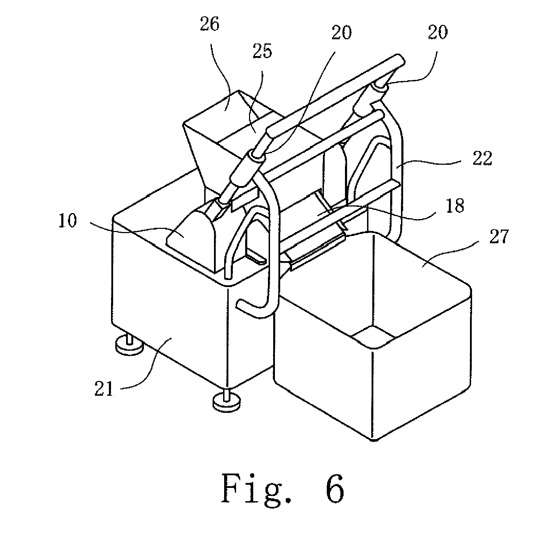

As shown in Fig. 6, the opposed roller 2 is attached to a damper mechanism 20. The damper mechanism includes a pair of air dampers 20. The casing 10 is mounted on a housing 21. A support 22 is mounted on the housing 21. The air dampers 20 are attached to both the support 22 and opposite ends of the opposed roller 2 outside the casing 10. The air dampers 20 work on the opposed roller 2. Thus, the opposed roller 2 is elastically and rotatably supported by the air dampers 20 and bearing.

As shown in Fig. 3, a motor 70 is connected with the rotary body 3 so as to rotate it 3. A sprocket 23 is mounted on the rotary body 3 coaxially thereof. The motor 70 is accommodated in the housing 21. Another sprocket 72 is mounted on the axle 71 of the motor 70. A chain 24 is engaged with the sprockets 23 and 72 to extend therebetween.

As shown in Fig. 6, the casing 10 is covered by a cover 25 in such a manner that an opening 26 is formed to insert the meat ingredient. A wagon 27 is disposed below an end of the lower portion 18 of the chute.

As shown in Fig. 2, after the meat ingredient is inserted into the opening 26, the meat ingredient is slipped along the upper portion 17 of the chute and fed between the spout and opposed rollers 1 and 2. When the meat ingredient is nipped between the spout and opposed rollers 1 and 2, the opposed roller 2 is pressed up by the meat ingredient, and its resistance is absorbed by the air dampers 20. And, the air dampers 20 work on the opposed roller 2 so as to press the meat ingredient.

When the meat ingredient is nipped between the spout and opposed rollers 1 and 2, the rotary body 3 is rotated around the fixed body 4, and the opposed roller 2 is rotated around its axis. In this embodiment, the rotary body 3 is rotated by the motor 70, and the opposed roller 2 is rotated by a friction of the meat ingredient, in and at rotary directions and speeds corresponding to feed direction and speed of the meat ingredient.

When some of the small holes 5 are communicated with the slot 6 by a rotation of the rotary body 3 around the fixed body 4, the pickling liquid is spouted from the small holes 5 so as to be injected into the meat ingredient. Then, the meat ingredient is slipped along the lower portion 18 of the chute, and falls down in the wagon 27.

In the injector, a wedge-shaped space is formed between the spout and opposed rollers 1 and 2. The meat ingredient passes through the wedge-shapedspace, at the same time it is nippedbetween the spout and opposed rollers 1 and 2. The space is made of both curved surfaces of the rollers 1 and 2. Thus, even if the meat ingredient is hard, the meat ingredient is smoothly nipped between the spout and opposed rollers 1 and 2 because its resistance is small. As a result, the pickling liquid is injected into the meat ingredient correctly.

The meat ingredient needs not be conveyed by the conveyer because it can be slipped along the chute 17, 18. The injector is simple in structure and low in cost. Further, the injector can be compact in whole.

In another embodiment of the injector, the spout roller 1 can be used as the opposed roller 2. The roller 2 includes the cylindrical rotary and fixed bodies 3 and 4, and has the same structure as the spout roller 1 of Fig. 3. The fixed body 3 is fitted with the outer surface of the fixed body 4. A lot of the small holes 5 are formed in the outer surface of the rotary body 3. The slot 6 is formed in the outer surface of the fixed body 4. The passage is formed in the fixed body 4. The small holes 5 extend in a radial direction of the rotary body 3, and pass through the rotary body 3. The slot 6 extends in a length direction of the fixed body 4. The passage is communicated with the slot 6. The pumps 13 are connected with the passage. The pickling liquid is pressured by the pumps 13 so as to be fed into both the passage and slot 6, and spouted from the small holes 5.

In this case, the slots 6 are formed in both the fixed bodies 4 of the spout and opposed rollers 1 and 2 respectively. Each of the slots 6 of the spout and opposed rollers 1 and 2 are opposite to each other. The rotary body 3 is rotated around the fixed body 4, and the pickling liquid is spouted into the meat ingredient. The rotary body 3 of the opposed roller 2 can be connected with the motor 70, like the spout roller 1, so that the rotary body 3 is rotated by the motor 70.

The convey mechanism may include a conveyer conveying the meat ingredient.

### DESCRIPTION OF THE REFERENCE CHARACTERS

- 1: pickling liquid spout roller
- 2: opposed roller
- 3: cylindrical rotary body
- 4: cylindrical fixed body
- 5: small hole
- 6: slot
- 7: sealing member
- 8: communicating hole
- 9: center hole
- 10: casing
- 11, 12: bracket
- 13: pump
- 14: caster
- 15: pipes
- 16: tank
- 17, 18: chute, lower portion, upper portion
- 19: opening groove
- 20: damper mechanism, air damper
- 21: housing
- 22: support
- 23: sprocket
- 24: chain
- 25: cover
- 26: opening
- 27: wagon
- 50: pyramid shaped projections
- 60: opposite ends
- 61: side walls
- 70: motor
- 71: axle
- 72: sprocket
- P: pitch
- S1, S2: gap

## Claims

1. A pickling liquid injector, comprising:
a pickling liquid spout roller (1) including cylindrical rotary(3) and fixed bodies(4), the rotary body(3) being fitted with an outer surface of the fixed body(4), a lot of small holes (5) being formed in an outer surface of the rotary body(3), a slot (6) being formed in the outer surface of the fixed body(4), a passage being formed in the fixed body (4), the small holes (5) extending in a radial direction of the rotary body (3) and passing through the rotary body(3), the slot (6) extending in a length direction of the fixed body(4), the passage being communicated with the slot (6), at least one pump (13) being connected with the passage, and a pickling liquid being pressured by the pump(13) so as to be fed into both the passage and slot(6), and spouted from the small holes(5);
an opposed roller (2) parallel and opposite to the spout roller(1) at a position where the slot(6) is disposed; and
a convey mechanism that conveys a meat ingredient between the spout and opposed rollers(1,2), wherein
the meat ingredient is nipped between the spout and opposed rollers(1,2), the rotary body(3) is rotated around the fixed body(4), the opposed roller(2) is rotated around an axis thereof, and the pickling liquid is injected into the meat ingredient.

2. The injector according to claim 1, wherein the convey mechanism includes an incline chute (17,18), an opening groove (19) is formed in the chute (17,18), the opposed roller (2) is opposite to the spout roller (1) at a position where the opening groove (19) is disposed, the opposed roller(2), spout roller(1) and opening groove (19) extend widthwise of the chute (17,18), the chute extends between the spout and opposed rollers (1,2) and the meat ingredient is slipped along the chute and fed between the spout and opposed rollers(1,2).

3. The injector according to claim 2, wherein the opposed roller (2) is disposed above the opening groove(19), and the spout roller(1) is disposed below the opening groove(19).

4. The injector according to claim 1, further comprising a motor (70) connected with the rotary body (3), wherein the rotary body(3) is rotated by the motor(70).

5. The injector according to claim 1, wherein the opposed roller (2) has the same structure as the spout roller (1).
